# EUROPÄISCHE PATENTSCHRIFT

(11) **EP 2 526 038 B1**
(45) Veröffentlichungstag und Bekanntmachung des Hinweises auf die Patenterteilung: **29.08.2018**
(21) Anmeldenummer: 11700388.9
(22) Anmeldetag: 13.01.2011
(51) Int. Cl.: B65G 49/04, B05B 13/02

(54) **FÖRDERSYSTEM ZUM TRANSPORT VON GEGENSTÄNDEN UND TAUCHBEHANDLUNGSANLAGE MIT EINEM SOLCHEN**
CONVEYOR SYSTEM FOR TRANSPORTING ARTICLES AND DIP COATING LINE COMPRISING SAID SYSTEM
SYSTÈME DE CONVOYAGE POUR LE TRANSPORT D'OBJECTS ET INSTALLATION DE TRAITEMENT PAR IMMERSION ÉQUIPÉE D'UN SYSTÈME DE CE TYPE

(30) Priorität: 18.01.2010 DE 102010004974
(43) Veröffentlichungstag der Anmeldung: 28.11.2012
(73) Patentinhaber: Eisenmann SE, 71032 Böblingen (DE)
(72) Erfinder: SCHURBA, Alexander, 71032 Böblingen (DE)
(74) Vertreter: Ostertag & Partner Patentanwälte mbB
(86) Internationale Anmeldenummer: PCT/EP2011/000115
(87) Internationale Veröffentlichungsnummer: WO 2011/085984

(56) Entgegenhaltungen:
- WO-A1-03/076315
- DE-A1- 10 210 941
- DE-A1-102004 024 614
- DE-A1-102005 001 641

## Beschreibung

Die Erfindung betrifft ein Fördersystem zum Transport von Gegenständen, insbesondere zum Transport von Fahrzeugkarosserien, in einer Tauchbehandlungsanlage mit
a) mindestens einem Transportwagen, welcher
   aa) ein Fahrwerk umfasst, das mindestens ein lastabtragendes Laufrad lagert, welches um eine Drehachse verdrehbar ist;
   ab) eine um eine Schwenkachse verschwenkbare Befestigungseinrichtung umfasst, an welcher wenigstens ein Gegenstand befestigbar ist;
b) einer Führungsschiene, auf welcher das wenigstens eine lastabtragende Laufrad abläuft;
c) Antriebsmitteln zum Verfahren des Transportwagens entlang der Führungsschiene.

Außerdem betrifft die Erfindung eine Tauchbehandlungsanlage mit
a) mindestens einem Tauchbecken, welches mit einer Behandlungsflüssigkeit füllbar ist, in welcher zu behandelnde Gegenstände, insbesondere Fahrzeugkarosserien, eingetaucht werden können;
b) einem Fördersystem, welches die zu behandelnden Gegenstände an das Tauchbecken heran, in den Innenraum des Tauchbeckens hinein, aus dem Tauchbecken heraus und von diesem wegbewegen kann.

Bei solchen vom Markt her bekannten Systemen, wie sie in Tauchbehandlungsanlagen für Fahrzeugkarosserien eingesetzt werden und beispielsweise in der DE 10 2004 024 614 A1 beschrieben sind, sind mehrere lastabtragende Laufräder vorhanden. Die Schwenkachse der Befestigungseinrichtung ist dabei in einem Abstand zu den lastabtragenden Laufrädern angeordnet. Ein Verkippen des Fahrwerks um eine horizontale Achse senkrecht zur Transportrichtung wird durch entsprechende Gegenräder verhindert, die von unten an der Führungsschiene anliegen.

Abhängig von der Lage der Befestigungseinrichtung und des darauf befestigten Gegenstandes und der auf das Fahrwerk wirkenden Kräfte kann es bei dieser Anordnung dazu kommen, dass zumindest eines der lastabtragenden Laufräder etwas in Richtung von seiner Lauffläche weg bewegt wird. Hierdurch verringert sich der Anpressdruck des betrachteten Laufrades an die Lauffläche und kann so gering werden, dass es insbesondere beim Anfahren oder Abbremsen des Transportwagens zu einem Durchrutschen dieses Laufrades kommen kann. Hierdurch verschlechtert sich insgesamt die Antriebsleistung und besonders die Beschleunigungs- oder Bremsleistung.

Aufgabe der vorliegenden Erfindung ist es daher, ein Fördersystem und eine Tauchbehandlungsanlage der eingangs genannten Art bereitzustellen, welche diesen Gedanken Rechnung tragen.

Bei dem Fördersystem der eingangs genannten Art wird diese Aufgabe dadurch gelöst, dass
d) die Drehachse des wenigstens einen lastabtragenden Laufrads und die Schwenkachse der Befestigungseinrichtung koaxial zueinander angeordnet sind;
e) die Schwenkachse der Befestigungseinrichtung durch eine Drehwelle vorgegeben ist, welche an einem ersten Ende an dem Fahrwerk gelagert ist;
f) das zweite Ende der Drehwelle passiv mitgeführt wird.

Es wurde herausgefunden, dass auf diese Weise der Anpressdruck des lastabtragenden Laufrades an die Führungsschiene bzw. deren zugehörige Lauffläche zuverlässig aufrechterhalten bleibt, unabhängig von der Bewegungsrichtung des Transportwagens und unabhängig davon, ob der Transportwagen beschleunigt oder verzögert wird oder mit konstanter Geschwindigkeit entlang der Führungsschiene verfahren wird.

Darüber hinaus kann das Fahrwerk und damit der Transportwagen bei der koaxialen Anordnung der Drehachse des lastabtragenden Laufrads und der Schwenkachse der Befestigungseinrichtung gegenüber bekannten Transportwagen verhältnismäßig kompakt ausgebildet sein. Das zweite Ende der Drehwelle kann z.B. ein zweites lastabtragendes Laufrad lagern, welches jedoch nicht dem Fahrwerk zuzuordnen ist.

In diesem Fall kann die Drehwelle vorteilhaft das lastabtragende Laufrad lagern.

Der Transportwagen kann zwar insgesamt mehrere lastabtragende Laufräder umfassen. Wenn jedoch dessen Fahrwerk als solches nur ein einziges lastabtragendes Laufrad lagert, kann es besonders kompakt ausgebildet sein.

Wenn das lastabtragende Laufrad angetrieben ist, kann jeder Transportwagen individuell gesteuert und verfahren werden. Dies ist z.B. bei einem Kettenförderer als Antrieb nicht ohne Weiteres möglich.

Es ist von Vorteil, wenn die Schwenkachse der Befestigungseinrichtung eine erste Schwenkachse ist und die Befestigungseinrichtung außerdem um eine zweite Schwenkachse verschwenkbar ist, die einen Abstand von der ersten Schwenkachse aufweist. Auf diese Weise ist die Anzahl der Bewegungsfreiheitsgrade des zu behandelnden Gegenstandes erhöht.

Wenn Antriebseinrichtungen vorhanden sind, mittels welchen die Befestigungseinrichtung um die erste Schwenkachse und/oder um die zweite Schwenkachse verschwenkbar ist, kann ein kontinuierlicher Bewegungsablauf beim Durchführen des Gegenstandes durch ein Tauchbecken erzielt werden.

Dabei ist es besonders günstig, wenn die Antriebseinrichtungen derart eingerichtet sind, das die Befestigungseinrichtung unabhängig voneinander um die erste Schwenkachse oder um die zweite Schwenkachse verschwenkt werden kann. Auf diese Weise kann der Bewegungsablauf des Gegenstandes individuell an die vor Ort herrschenden Gegebenheiten und/oder an den zu behandelnden Gegenstand angepasst werden.

Die oben genannte Aufgabe wird bei einer Tauchbehandlungsanlage der eingangs genannten Art dadurch gelöst, dass
c) das Fördersystem nach einem der Ansprüche 1 bis 9 ausgebildet ist.

Die Vorteile einer derart ausgestalteten Tauchbehandlungsanlage entsprechen sinngemäß den oben zum Fördersystem genannten Vorteilen.

Ausführungsbeispiele der Erfindung werden nachstehend anhand der Zeichnungen näher erläutert. In diesen zeigen:
- Figur 1: eine Ansicht von oben auf einen Transportwagen eines Fördersystems zum Transport von Fahrzeugkarosserien, welches in einer kataphoretischen Tauchlackieranlage verwendet wird;
- Figur 2: eine Ansicht des Transportwagens aus Richtung des Pfeils II in Figur 1, wobei der Transportwagen im Teilschnitt gezeigt ist;
- Figur 3: den Teilschnitt des Transportwagens nach Figur 2 in vergrößertem Maßstab;
- Figur 4: einen Schnitt des Transportwagens entlang der Schnittlinie IV-IV in Figur 2;
- Figur 5: einen Schnitt des Transportwagens entlang der Schnittlinie V-V in Figur 2 in vergrößertem Maßstab;
- Figur 6: eine der Figur 4 entsprechende Ansicht eines abgewandelten Transportwagens.

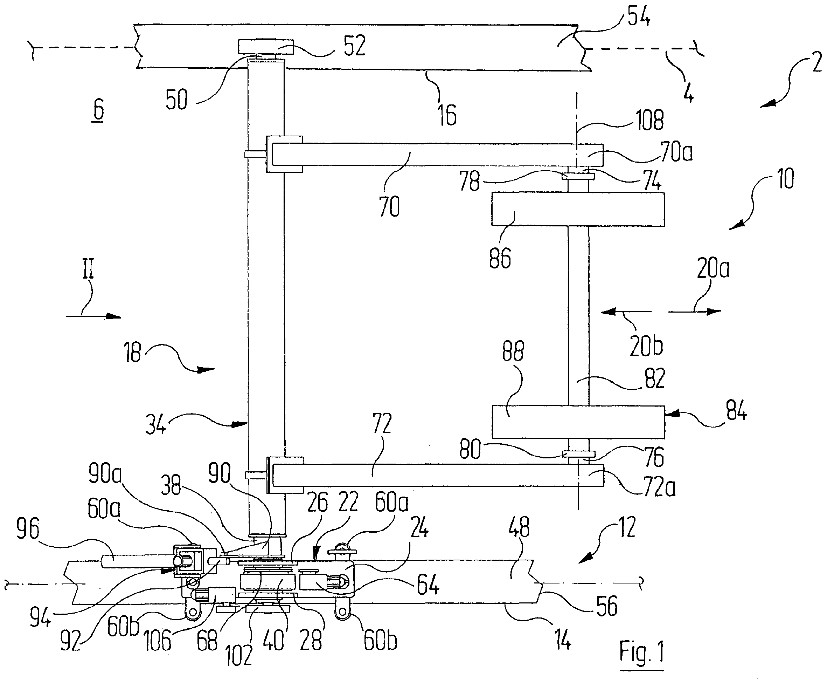

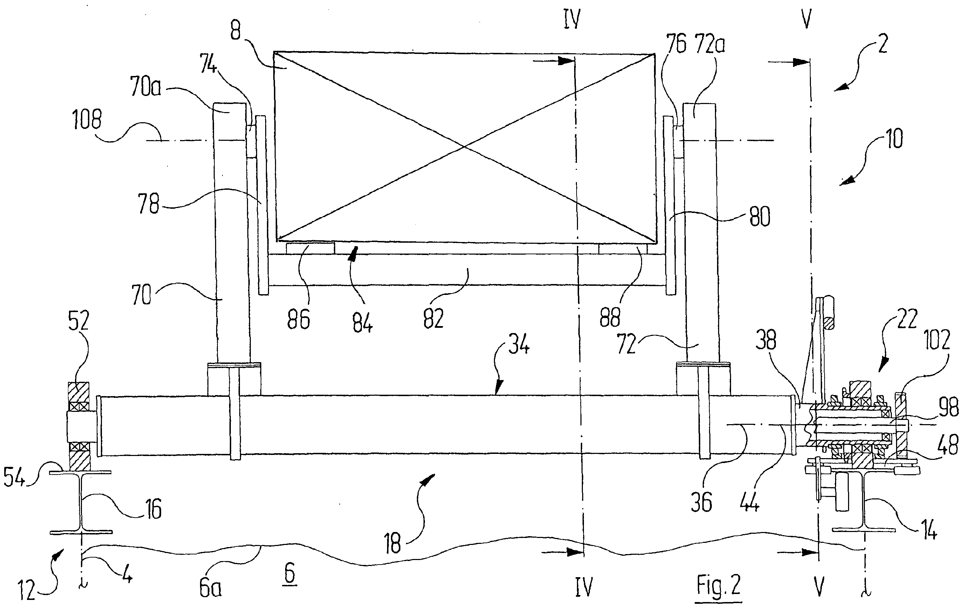

In Figur 1 ist mit 2 insgesamt eine schematisch dargestellte kataphoretische Tauchlackiereinlage bezeichnet. Diese umfasst ein in den Figuren 1 und 2 schematisch durch gestrichelte Linien angedeutetes Tauchbecken 4, welches in bekannter Weise mit flüssigem Lack 6 bis zu einem bestimmten Flüssigkeitsspiegel angefüllt ist, der nur in Figur 2 zu erkennen und dort mit 6a gekennzeichnet ist.

Mittels der Tauchlackieranlage 2 werden Gegenstände lackiert, im dargestellten Ausführungsbeispiel Fahrzeugkarosserien 8, von denen nur in Figur 2 eine Fahrzeugkarosserie 8 stark vereinfacht gezeigt ist.

Zwischen zu lackierenden Fahrzeugkarosserien 8 und Anoden, die entlang des Bewegungsweges der Fahrzeugkarosserien 8 angeordnet und der Übersichtlichkeit halber nicht dargestellt sind, wird in an und für sich bekannter Weise ein elektrisches Feld erzeugt. In diesem elektrischen Feld wandern die im Lack 6 enthaltenen Farbpartikel auf die Fahrzeugkarosserien 8 zu und werden an diesen abgeschieden. Einzelheiten dieses Vorgangs sind allgemein bekannt und werden daher hier nicht näher erörtert.

Mit Hilfe eines Fördersystems 10 werden die Fahrzeugkarosserien 8 durch die Tauchlackieranlage 2 und insbesondere durch das Tauchbecken 4 und den darin befindlichen Lack 6 geführt. Dazu umfasst das Fördersystem 10 ein Schienensystem 12 mit einer Führungsschiene 14 und einer Laufschiene 16, welche sich längs der Tauchbecken 4 auf deren gegenüberliegenden Seiten parallel zueinander erstrecken.

Auf dem Schienensystem 12 läuft eine Vielzahl von Transportwagen 18 ab, welche jeweils eine Fahrzeugkarosserie 8 aufnehmen und unabhängig voneinander in Richtung des Pfeils 20a oder in Richtung des dazu entgegengesetzten Pfeils 20b verfahren werden können (siehe Figur 1).

Der Transportwagen 18 umfasst ein Fahrwerk 22, welches eine Grundplatte 24 aufweist, an der zwei voneinander beabstandete Tragwangen 26, 28 angebracht sind, die senkrecht zur Grundplatte 24 sowie parallel zueinander und zur Transportrichtung 20 verlaufen.

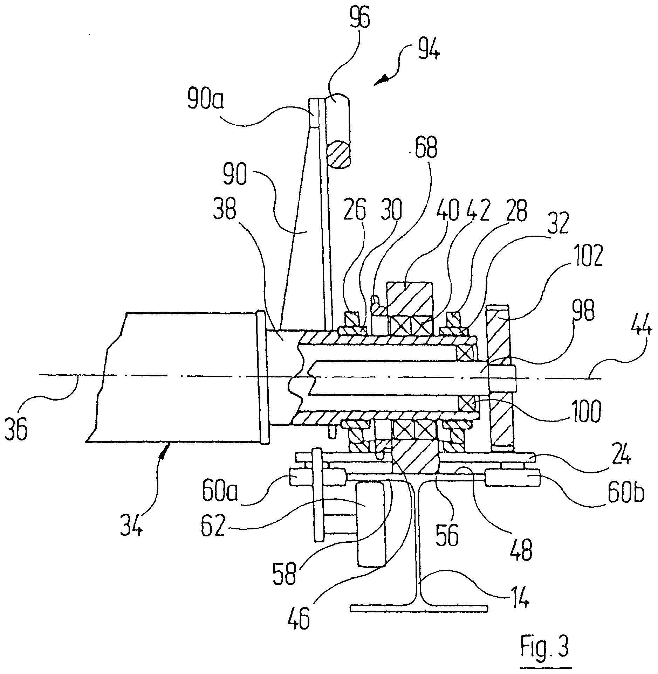

Komponenten, welche sowohl in Figur 2 als auch in Figur 3 zu erkennen sind, sind der Übersichtlichkeit halber teilweise nur in Figur 3 mit Bezugszeichen versehen.

Die Tragwangen 26, 28 halten in entsprechenden Durchgängen koaxial zueinander jeweils ein Gleitlager 30, 32, welche ihrerseits eine als Hohlwelle ausgebildete Drehwelle 34 lagern, die um ihre Längsachse 36 verdrehbar ist. Hierzu ist ein Ende 38 der Drehwelle 34 als zu den Gleitlagern 30, 32 komplementärer Wellenstutzen ausgebildet.

Im Bereich zwischen den Tragwangen 26, 28 ist ein lastabtragendes Laufrad 40 angeordnet, welches mittels eines Kugellagers 42 in Umfangsrichtung auf der Drehwelle 34 abrollen kann. Die Drehachse 44 des Laufrades 40 und die Drehachse 36 der Drehwelle 34 sind somit koaxial zueinander angeordnet und fallen zusammen. Die Drehachsen 36 und 44 sind nur in den Figuren 2 und 3 gezeigt.

Das Laufrad 40 tritt durch einen Durchgang 46 in der Grundplatte 24 durch dieselbe hindurch und rollt auf einer oberen Lauffläche 48 der Führungsschiene 14 ab.

Die Drehwelle 34 ist so lang, dass sie sich von dem Fahrwerk 22 über die gesamte Breite des Tauchbeckens 4 hinweg erstreckt. An ihrem vom Fahrwerk 22 abliegenden zweiten Ende 50 lagert die Drehwelle 34 eine nicht angetriebene Laufrolle 52, die auf einer oberen Lauffläche 54 der Laufschiene 16 abrollt. Das lastabtragende Laufrad 40 und die Laufrolle 52 haben denselben Außendurchmesser, so dass die Drehwelle 34 horizontal verläuft, wenn die oberen Laufflächen 48 und 54 der Führungsschiene 14 und der Laufschiene 16 in einer gemeinsamen horizontalen Ebene verlaufen.

Wie in den Figuren 2 und 3 zu erkennen ist, ist die Führungsschiene 14 als I-Profil ausgebildet, dessen obere horizontale Profilplatte 56 die obere Lauffläche 48 und auf der gegenüberliegenden Seite eine untere Lauffläche 58 bietet. Um das Fahrwerk auf der Führungsschiene 14 zu stabilisieren, lagert die Grundplatte 24 zwei Paare von seitlichen Führungsrollen 60a und 60b, welche um eine vertikale Achse verdrehbar sind und jeweils seitlich an den Seitenflanken der Profilplatte 56 der Führungsschiene 14 anliegen. Darüber hinaus lagert die Grundplatte 24 ein Paar von um jeweils eine horizontale Achse verdrehbaren Gegendruckrollen 62, welche jeweils von unten gegen die unteren Lauffläche 58 anliegen und ein Verkippen des Fahrwerks 22 um die Drehachse 44 des Laufrades 40 verhindern.

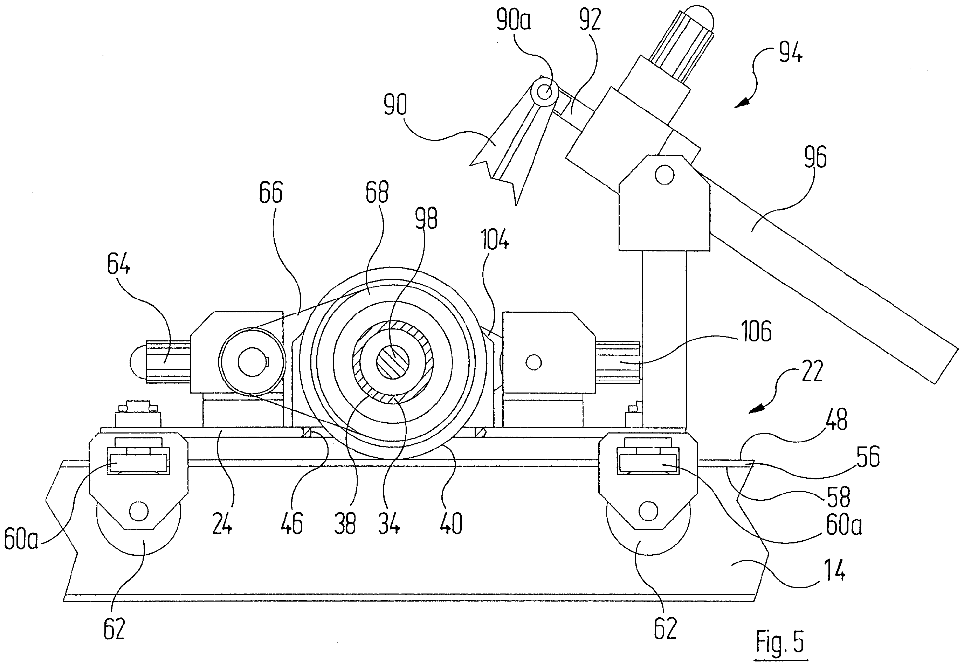

Das lastabtragende Laufrad 40 ist mittels eines Elektromotors 64 angetrieben und ist mit diesem über eine in Figur 5 zu erkennende Kette 66 gekoppelt. Hierzu ist an einer Flanke des lastabtragenden Laufrads 40 ein Zahnkranz 68 angebracht, der mit der Kette 66 zusammenarbeitet. Alternativ kann z.B. auch ein Riementrieb vorgesehen sein.

Die Drehwelle 34 trägt zwei parallel zueinander verlaufende Schwenkarme 70 und 72, welche als Hohlprofil ausgebildet sind und sich in radialer Richtung von der Drehwelle 34 weg erstrecken. Die Schwenkarme 70 und 72 sind starr mit der Drehwelle 34 verbunden, wobei jeweils ein in den Figuren nicht zu erkennender Durchgang zwischen dem Inneren der Drehwelle 34 und dem Inneren der Schwenkarme 70 und 72 vorhanden ist.

Die von der Drehwelle 34 abliegenden freien Enden 70a bzw. 72a der Schwenkarme 70 und 72 sind jeweils gelenkig über eine antreibbare Stummelwelle 74, 76 mit einer Schwenklasche 78, 80 verbunden. Die von den Stummelwellen 74, 76 abliegenden Enden 78a, 80a der Schwenklaschen 78, 80 sind über eine parallel zur Drehwelle 34 verlaufende Quertraverse 82 miteinander gekoppelt. Die Quertraverse 82 trägt starr eine Befestigungseinrichtung 84 in Form von zwei parallel verlaufenden Tragstreben 86, 88, auf welcher eine zu lackierende Fahrzeugkarosserie 8 mit oder ohne einem Förderskid, wie er an für sich bekannt ist, befestigt werden kann.

Um die Drehwelle 34 um ihre Drehachse 36 verdrehen zu können, ist sie im Bereich des Fahrwerks 22 des Transportwagens 18 starr mit einem Koppelhebel 90 verbunden, welche sich in radialer Richtung von der Drehwelle 34 weg erstreckt. Das von der Drehwelle 34 abliegende Ende 90a des Koppelhebels 90 ist mit der Spindel 92 eines Spindelantriebs 94 verbunden, wie er an und für sich bekannt ist. Bezogen auf ein Spindelgehäuse 96 kann die Spindel 92 aus- oder eingefahren werden. Abhängig davon, ob die Spindel 92 des Spindelantriebs 94 aus- oder eingefahren wird, verdreht sich die Drehwelle 34 auf Grund der Kopplung mit der Spindel 92 über den Koppelhebel 90 in die eine oder die andere Richtung um ihre Drehachse 36.

Dabei werden auch die Schwenkarme 70, 72 mit der Befestigungseinrichtung 84 um die Drehachse 36 der Drehwelle 34 verschwenkt. Die Drehachse 36 der Drehwelle 34 ist somit zugleich eine erste Schwenkachse der Befestigungseinrichtung 84.

Der Winkel, um welchen die Schwenkarme 70, 72 und die Befestigungseinrichtung 84 maximal um diese Schwenkachse 36 verschwenkt werden können, hängt von der Länge der Spindel 92 des Spindelantriebs 94 ab. Je länger diese ist und je weiter diese aus dem Spindelgehäuse 96 ausgefahren werden kann, desto größer ist der maximale Schwenkwinkel.

Im Inneren der Drehwelle 34 verläuft außerdem eine zu dieser koaxiale Innenwelle 98, die mittels Kugellager 100 verdrehbar gelagert ist. Die Innenwelle 98 ragt aus dem Wellenstutzen 38 der Drehwelle 34 heraus und trägt an ihrem freien Ende ein Zahnrad 102.

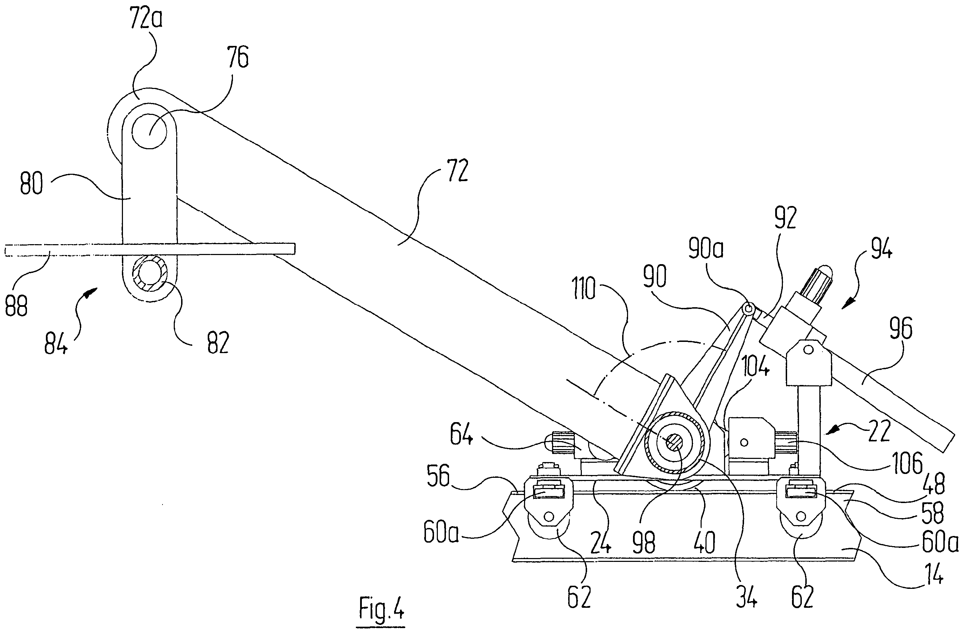

Dieses ist über eine Kette 104, die in den Figuren 4 bis 6 bereichsweise zu erkennen ist, mit einem Elektromotor 106 gekoppelt, durch welchen die Innenwelle 98 in beide mögliche Richtungen um ihre Längsachse herum verdreht werden kann. Alternativ kann auch hier z.B. ein Riementrieb vorgesehen sein.

Über die Innenbereiche der Drehwelle 34 und der Schwenkarme 70, 72 sind die Stummelwellen 74, 76 in an und für sich bekannter Weise derart mit der Innenwelle 98 gekoppelt, dass ein Verdrehen der Innenwelle 98 zu einem entsprechenden Verdrehen der Stummelwellen 74, 76 führt. Gegebenenfalls kann zwischen der Innenwelle 98 und den Stummelwellen 74, 76 noch ein Getriebe für eine Über- oder Untersetzung der Drehbewegung der Innenwelle 98 sorgen.

Wenn also die Innenwelle 98 mittels des Elektromotors 106 verdreht wird, führt dies zu einer entsprechenden Verdrehung der Stummelwellen 74, 76 und damit zu einer Schwenkbewegung der Schwenklaschen 78, 80. Insgesamt wird so die Befestigungseinrichtung 84 um eine durch die Stummelwellen 75, 76 vorgegebene zweite Schwenkachse 108 herum verschwenkt.

Auf Grund der unabhängigen Antriebe, nämlich Spindelantrieb 94 und Elektromotor 106, können die Drehwelle 34 und die Innenwelle 98 somit unabhängig voneinander verdreht werden. Hierdurch kann die Befestigungseinrichtung 84 unabhängig voneinander um die Schwenkachse 36 oder um die Schwenkachse 108 herum verschwenkt werden, wobei auch ein gleichzeitiges verschwenken um beide Achsen 36 und 108 möglich ist.

Insgesamt kann mit dem Fördersystem 10 somit ein Bewegungsablauf der Fahrzeugkarosserie erzielt werden, der durch eine Überlagerung einer Translationsbewegung, einer ersten Schwenkbewegung um die durch die Drehachse 36 der Drehwelle 34 gebildete erste Schwenkachse 36 und einer zweiten Schwenkbewegung um die durch die Stummelwellen 75, 76 vorgegebene zweite Schwenkachse 108 gebildet ist.

Auch kann nur eine Translationsbewegung oder nur eine Schwenkbewegung um die erste Schwenkachse 36 oder nur eine Schwenkbewegung um die zweite Schwenkachse 108 der Fahrzeugkarosserie 8 oder eine Kombination von jeweils zwei dieser Bewegungen erfolgen.

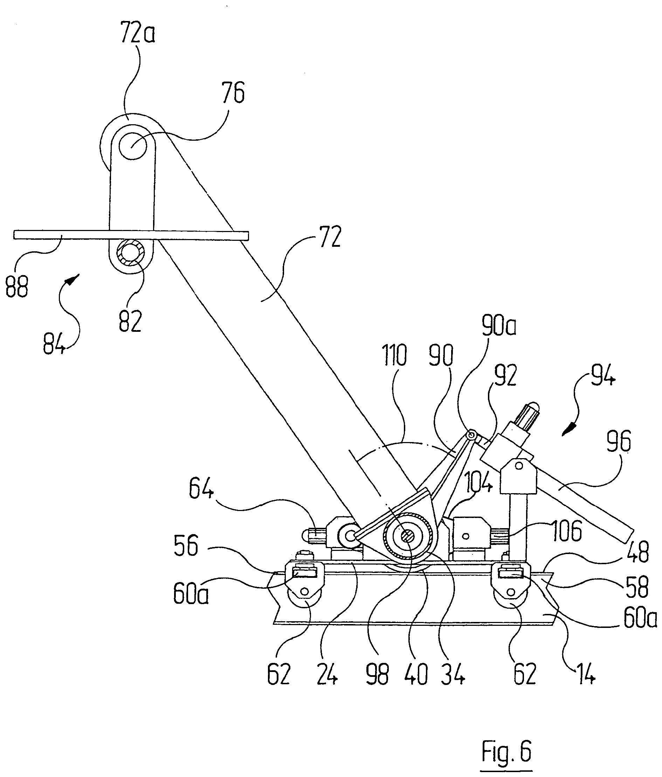

Der Koppelhebel 90 schließt mit den Schwenkarmen 70, 72 bei einer Projektion in eine gemeinsame Ebene einen vorgegebenen Winkel ein, der beim vorliegenden Ausführungsbeispiel 90° beträgt und in den Figuren 4 und 6 mit dem Bezugszeichen 110 gekennzeichnet ist. Wenn die Spindel 92 so weit wie möglich in das Spindelgehäuse 96 eingefahren ist, nehmen die Schwenkarme 70, 72 eine Stellung ein, in der ihre freien Ende 70a, 72a ihre höchste Position innehaben. Dies ist in Figur 4 gezeigt. Als Bezugshöhe kann beispielsweise die vertikale Lage der Lauffläche 48 der Führungsschiene 14 dienen.

Abhängig von dem Winkel 110, welchen der Koppelhebel 90 und die Schwenkarme 70, 72 miteinander einschließen, kann die maximal erzielbare Höhe der freien Enden 70a, 72a der Schwenkarme 70, 72 eingestellt werden.

In Figur 6 ist beispielsweise eine Abwandlung des Transportwagens 18 gezeigt, bei welcher dieser Winkel 110 kleiner als 90° ist und nur etwa 65° beträgt. Wie im Vergleich zu Figur 4 gut zu erkennen ist, sind die freien Enden 70a, 72a der Schwenkarme 70, 72 dort bezogen auf die Lauffläche 48 der Führungsschiene 14 höher angeordnet, wenn die Spindel 92 so weit wie möglich in das Spindelgehäuse 96 eingefahren ist.

## Patentansprüche

1. Fördersystem zum Transport von Gegenständen (8), insbesondere zum Transport von Fahrzeugkarosserien (8), in einer Tauchbehandlungsanlage (2) mit
a) mindestens einem Transportwagen (18), welcher
aa) ein Fahrwerk (22) umfasst, das mindestens ein lastabtragendes Laufrad (40) lagert, welches um eine Drehachse (44) verdrehbar ist;
ab) eine um eine Schwenkachse (36) verschwenkbare Befestigungseinrichtung (84) umfasst, an welcher wenigstens ein Gegenstand (8) befestigbar ist;
b) einer Führungsschiene (14), auf welcher das wenigstens eine lastabtragende Laufrad (40) abläuft;
c) Antriebsmitteln (64) zum Verfahren des Transportwagens (18) entlang der Führungsschiene (14),
**dadurch gekennzeichnet, dass**
d) die Drehachse (44) des wenigstens einen lastabtragenden Laufrads (40) und die Schwenkachse (36) der Befestigungseinrichtung (84) koaxial zueinander angeordnet sind;
e) die Schwenkachse (36) der Befestigungseinrichtung (84) durch eine Drehwelle (34) vorgegeben ist, welche an einem ersten Ende (38) an dem Fahrwerk (22) gelagert ist;
f) dass das zweite Ende (50) der Drehwelle (34) passiv mitgeführt wird.

2. Fördersystem nach Anspruch 1, **dadurch gekennzeichnet, dass** die Drehwelle (36) das lastabtragende Laufrad (40) lagert.

3. Fördersystem nach Anspruch 2, **dadurch gekennzeichnet, dass** das Fahrwerk (22) nur ein einziges lastabtragendes Laufrad (40) lagert.

4. Fördersystem nach einem der Ansprüche 1 bis 3, **dadurch gekennzeichnet, dass** das lastabtragende Laufrad (40) angetrieben ist.

5. Fördersystem nach einem der Ansprüche 1 bis 4, **dadurch gekennzeichnet, dass** die Schwenkachse (36) der Befestigungseinrichtung (84) eine erste Schwenkachse (36) ist und die Befestigungseinrichtung (84) außerdem um eine zweite Schwenkachse (108) verschwenkbar ist, die einen Abstand von der ersten Schwenkachse (36) aufweist.

6. Fördersystem nach Anspruch 5, **dadurch gekennzeichnet, dass** Antriebseinrichtungen (64, 66, 68; 102, 104, 106) vorhanden sind, mittels welchen die Befestigungseinrichtung (84) um die erste Schwenkachse (36) und/oder um die zweite Schwenkachse (108) verschwenkbar ist.

7. Fördersystem nach Anspruch 6, **dadurch gekennzeichnet, dass** die Antriebseinrichtungen (64, 66, 68; 102, 104, 106) derart eingerichtet sind, das die Befestigungseinrichtung (84) unabhängig voneinander um die erste Schwenkachse (36) oder um die zweite Schwenkachse (108) verschwenkt werden kann.

8. Tauchbehandlungsanlage mit
a) mindestens einem Tauchbecken (4), welches mit einer Behandlungsflüssigkeit (6) füllbar ist, in welcher zu behandelnde Gegenstände (8), insbesondere Fahrzeugkarosserien (8), eingetaucht werden können;
b) einem Fördersystem (10), welches die zu behandelnden Gegenstände (8) an das Tauchbecken (4) heran, in den Innenraum des Tauchbeckens (4) hinein, aus dem Tauchbecken (4) heraus und von diesem wegbewegen kann,
**dadurch gekennzeichnet, dass**
c) das Fördersystem (10) nach einem der Ansprüche 1 bis 7 ausgebildet ist.

## Claims

1. A conveyor system for conveying objects (8), particularly for conveying vehicle bodies (8), in an immersion treatment installation (2) having
a) at least one conveyor carriage (18) which
aa) comprises a chassis (22) supporting at least one load-bearing wheel (40) which can be rotated about an axis of rotation (44);
ab) comprises a mounting device (84) which can be pivoted about a pivot axis (36) and on which at least one object (8) can be mounted;
b) a guide rail (14) along which the at least one load-bearing wheel (40) runs;
c) drive means (64) for moving the conveyor carriage (18) along the guide rail (14),
**characterized in that**
d) the axis of rotation (44) of the at least one load-bearing wheel (40) and the pivot axis (36) of the mounting device (84) are arranged coaxially to one another;
e) the pivot axis (36) of the mounting device (84) is specified by a rotary shaft (34) which is mounted on the chassis (22) at a first end (38);
f) the second end (50) of the rotary shaft (34) is carried along passively.

2. A conveyor system according to Claim 1, **characterized in that** the rotary shaft (36) supports the load-bearing wheel (40).

3. A conveyor system according to Claim 2, **characterized in that** the chassis (22) supports only one single load-bearing wheel (40).

4. A conveyor system according to one of Claims 1 to 3, **characterized in that** the load-bearing wheel (40) is driven.

5. A conveyor system according to one of Claims 1 to 4, **characterized in that** the pivot axis (36) of the mounting device (84) is a first pivot axis (36) and the mounting device (84) can moreover be pivoted about a second pivot axis (108) which is at a spacing from the first pivot axis (36).

6. A conveyor system according to Claim 5, **characterized in that** drive devices (64, 66, 68; 102, 104, 106) are present, by means of which the mounting device (84) can be pivoted about the first pivot axis (36) and/or about the second pivot axis (108).

7. A conveyor system according to Claim 6, **characterized in that** the drive devices (64, 66, 68; 102, 104, 106) are configured in such a way that the mounting device (84) can be pivoted about the first pivot axis (36) or about the second pivot axis (108) independently of one another.

8. An immersion treatment installation having
a) at least one immersion tank (4) which can be filled with a treatment fluid (6) in which objects (8) to be treated, particularly vehicle bodies (8), can be immersed;
b) a conveyor system (10) which can move the objects (8) to be treated towards the immersion tank (4), into the interior of the immersion tank (4), out of the immersion tank (4) and away from this latter,
**characterized in that**
c) the conveyor system (10) is constructed according to one of Claims 1 to 7.

## Revendications

1. Système de convoyage pour le transport d'objets (8), en particulier pour le transport de carrosseries de véhicules (8), dans une installation de traitement par immersion (2), avec
a) au moins un chariot de transport (18), qui
aa) comprend un châssis (22), qui porte au moins une roue porteuse de charge (40), qui peut tourner autour d'un axe de rotation (44);
ab) comprend un dispositif de fixation (84) pouvant pivoter autour d'un axe de pivotement (36), et sur lequel au moins un objet (8) peut être fixé;
b) un rail de guidage (14), sur lequel ladite au moins une roue porteuse de charge (40) roule;
c) des moyens d'entraînement (64) pour le déplacement du chariot de transport (18) le long du rail de guidage (14),
**caractérisé en ce que**
d) l'axe de rotation (44) de ladite au moins une roue porteuse de charge (40)) et l'axe de pivotement (36) du dispositif de fixation (84) sont disposés de façon coaxiale l'un à l'autre;
e) l'axe de pivotement (36) du dispositif de fixation (84) est prédéterminé par un arbre rotatif (34), qui est supporté à une première extrémité (38) sur le châssis (22);
f) la deuxième extrémité (50) de l'axe de rotation (34) est entraînée passivement.

2. Système de convoyage selon la revendication 1, **caractérisé en ce que** l'arbre rotatif (36) porte la roue porteuse de charge (40).

3. Système de convoyage selon la revendication 2, **caractérisé en ce que** le châssis (22) ne porte qu'une seule roue porteuse de charge (40).

4. Système de convoyage selon l'une quelconque des revendications 1 à 3, **caractérisé en ce que** la roue porteuse de charge (40) est entraînée.

5. Système de convoyage selon l'une quelconque des revendications 1 à 4, **caractérisé en ce que** l'axe de pivotement (36) du dispositif de fixation (84) est un premier axe de pivotement (36) et le dispositif de fixation (84) peut par ailleurs pivoter autour d'un deuxième axe de pivotement (108), qui se trouve à une distance du premier axe de pivotement (36).

6. Système de convoyage selon la revendication 5, **caractérisé en ce qu'**il se trouve des dispositifs d'entraînement (64, 66, 68; 102, 104, 106), au moyen desquels le dispositif de fixation (84) peut pivoter autour du premier axe de pivotement (36) et/ou autour du deuxième axe de pivotement (108).

7. Système de convoyage selon la revendication 6, **caractérisé en ce que** les dispositifs d'entraînement (64, 66, 68; 102, 104, 106) sont réalisés de telle manière que le dispositif de fixation (84) puisse pivoter de façon indépendante l'un de l'autre autour du premier axe de pivotement (36) ou autour du deuxième axe de pivotement (108).

8. Installation de traitement par immersion avec
a) au moins une cuve d'immersion (4), qui peut être remplie avec un liquide de traitement (6), dans lequel des objets à traiter (8), en particulier des carrosseries de véhicule (8), peuvent être immergés;
b) un système de convoyage (10), qui peut amener les objets à traiter (8) à la cuve d'immersion (4), les introduire à l'intérieur de la cuve d'immersion (4), les retirer hors de la cuve d'immersion (4) et les éloigner de celle-ci,
**caractérisée en ce que**
c) le système de convoyage (10) est réalisé selon l'une quelconque des revendications 1 à 7.
